(19) Europäisches Patentamt
European Patent Office
Office européen des brevets

(11) **EP 3 487 261 B1**

(12) **EUROPEAN PATENT SPECIFICATION**

(45) Date of publication and mention
of the grant of the patent:
**05.05.2021 Bulletin 2021/18**

(51) Int Cl.:
***H05B 1/02*** *(2006.01)*

(21) Application number: **18205736.4**

(22) Date of filing: **12.11.2018**

(54) **CONTROLLING POWER TO A HEATED SURFACE**

STEUERUNG DER LEISTUNG EINER ERHITZTEN OBERFLÄCHE

COMMANDE DE PUISSANCE POUR UNE SURFACE CHAUFFÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2017 US 201715813458**

(43) Date of publication of application:
**22.05.2019 Bulletin 2019/21**

(73) Proprietor: **ROSEMOUNT AEROSPACE INC.
Burnsville, MN 55306-4898 (US)**

(72) Inventors:
• **WEBB, Matthew
Lakeville, MN 55044 (US)**
• **CHONG, Peter Mann-Lai
Lakeville, MN 55044 (US)**

(74) Representative: **Dehns
St. Bride's House
10 Salisbury Square
London EC4Y 8JD (GB)**

(56) References cited:
**WO-A1-2016/027184 US-A1- 2010 123 044**

**Description**

**BACKGROUND**

A typical windscreen installed on an aircraft uses an embedded heater to keep the windscreen free of ice and fog. Aircraft windscreens use an embedded temperature sensor to monitor the temperature of the windscreen and provide feedback to a heater controller as part of a closed loop system. When the temperature sensor(s) of an aircraft windscreen is damaged or otherwise compromised, the whole windscreen typically must be replaced to maintain an adequately functioning windscreen heating system.

US 2010/0123044 A1 discloses an ice protection system for an aircraft, the system including a controller which independently controls each of a plurality of ice protectors, and input channels which convey data to the controller.

WO 2016/027184 A1 discloses an apparatus and method for controlled heating of a vehicle window.

**SUMMARY**

The present invention relates to a surface heating system of an external surface of a vehicle as claimed in claim 1 and a method according to claim 8.

**BRIEF DESCRIPTION OF THE DRAWINGS**

FIG. 1 is a block diagram of an exterior surface heater control system.
FIG. 2 is a graph depicting the power per square inch needed to maintain a temperature of an exterior surface using an exterior surface heater control system as a function of the mass flow of the exterior surface.
FIG. 3 is a flow diagram depicting a process for maintaining the temperature of an exterior surface using a heater controller of an exterior surface heater control system.

**DETAILED DESCRIPTION**

Apparatus, systems, and associated methods relate to heating an exterior surface of a vehicle. Using the apparatus, systems, and associated methods herein, allows for the control of an exterior surface heater without an embedded temperature sensor. The heater is controlled based upon parameters including an external air temperature, a liquid water content of the external air, a speed of the vehicle, and a surface area of the external surface. In this way, there is no embedded temperature sensor to get damaged or fail and require the exterior surface to need replacing.

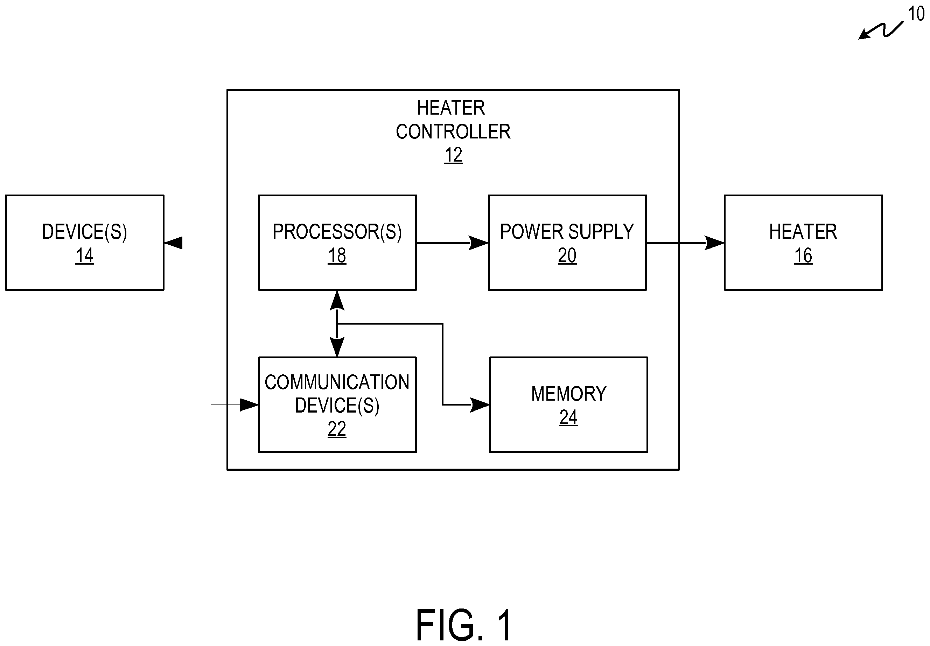

FIG. 1 is a block diagram of exterior surface heater control system 10 including heater controller 12, device(s) 14, and heater 16. Heater controller 12 includes processor(s) 18, power supply 20, communication device(s) 22, and memory 24.

Device(s) 14 is configured to aggregate and transmit sensed parameters to heater controller 12. Device(s) 14 can include aircraft condition monitoring systems, a sensor network, a vehicle monitoring and control unit, or other computing system. Device(s) 14 can communicate using a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

Heater 16 is configured to heat an exterior surface of a vehicle. Heater 16 can be embedded in the surface or in contact with the surface. Heater 16 is configured to receive heater power from heater controller 12. Heater controller 12 is configured to control the heater power of heater 16 based upon sensed parameters. The sensed parameters can include, for example, an air temperature, a liquid water content of the air, and a speed of the vehicle. Heater controller 12 is configured to adjust the heater power inversely with the air temperature. As the air temperature increases, heater controller 12 is configured to decrease the heater power. As the air temperature decreases, heater controller 12 is configured to increase the heater power. Heater controller 12 is configured to adjust the heater power proportionally to the liquid water content. As the liquid water content increases, heater controller 12 is configured to increase the heater power. As the liquid water content decreases, heater controller 12 is configured to decrease the heater power. Heater controller 12 is configured to adjust the heater power proportionally with the speed of the vehicle. In one example, the vehicle is an aircraft and heater controller 12 is further configured to control the heater power based upon an altitude of the aircraft. Heater controller 12 is configured to adjust the heater power proportionally with the altitude of the aircraft. In a further example the exterior surface is a windscreen of the aircraft.

Heater controller 12 includes communication device(s) 22 to communicate with external device(s) 14 via one or more wired or wireless networks, or both. Communication device(s) 22 can include a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB). In one example, communication device(s) 22 are configured to receive data corresponding to sensed parameters of vehicle sensors from device(s) 14. Data received by communication device(s) 22 includes the air temperature, the liquid water content of the air, the speed of the vehicle, and the altitude of the vehicle.

Processor(s) 18, in one example, are configured to implement functionality and/or process instructions for execution within heater controller 12. For instance, processor(s) 18 can be capable of processing instructions stored in memory of processor(s) 18. Examples of processor(s) 18 can include any one or more of a microprocessor, a controller, a digital signal processor (DSP), an application specific integrated circuit (ASIC), a field-programmable gate array (FPGA), or other equivalent discrete or integrated logic circuitry. In one example, processor(s) 18 are configured to receive data corresponding to the sensed one or more parameters and translate the data for transmission by communication device(s) 22. In one example, processor(s) 18 are configured to determine a power to maintain a temperature of an exterior surface based upon parameters such as the air temperature, the liquid water content of the air, and the speed of the vehicle. Processors(s) 18 are further configured to control power supply 20 to adjust the heater power supplied to heater 16 based upon the determined power.

Computer-readable memory 24 can be configured to store information within heater controller 12 during operation. Computer-readable memory 24, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, computer-readable memory 24 is a temporary memory, meaning that a primary purpose of computer-readable memory 24 is not long-term storage. Computer-readable memory 24, in some examples, is described as a volatile memory, meaning that computer-readable memory 24 does not maintain stored contents when power to heater controller 12 is removed. Examples of volatile memories can include random access memories (RAM), dynamic random access memories (DRAM), static random access memories (SRAM), and other forms of volatile memories. In some examples, computer-readable memory 24 is used to store program instructions for execution by processor(s) 18. Computer-readable memory 24, in certain examples, is used by processing applications running on heater controller 12 to temporarily store information during program execution, such as controlling the heater power supplied to heater 16, determining the power needed to maintain a temperature of the exterior surface, and/or transmitting and receiving data using communication device(s) 22.

Computer-readable memory 24, in some examples, also includes one or more computer-readable storage media. Computer-readable memory 24 can be configured to store larger amounts of information than volatile memory. Computer-readable memory 24 can further be configured for long-term storage of information. In some examples, computer-readable memory 24 include non-volatile storage elements. Examples of non-volatile storage elements can include magnetic hard discs, optical discs, floppy discs, flash memories, or forms of electrically programmable memories (EPROM) or electrically erasable and programmable (EEPROM) memories. In one example, computer-readable memory 24 is configured to store data including a look up table of parameters or surface area of the exterior surface.

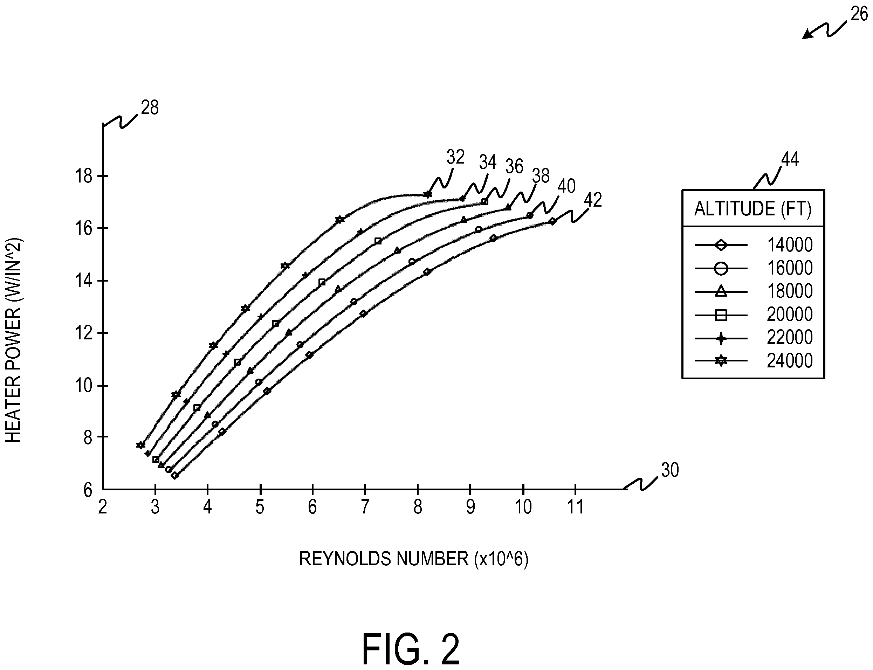

FIG. 2 is graph 26 depicting the power per square inch needed to maintain a temperature of an exterior surface using an exterior surface heater control system as a function of the mass flow of the exterior surface. Graph 26 includes y-axis 28; x-axis 30; curves 32, 34, 36, 38, 40, and 42; and legend 44.

Y-axis 28 represents the power needed to maintain a temperature of an exterior surface in watts per square inch. X-axis 30 represents the Reynolds number, which is dimensionless, at the exterior surface. Alternatively, mass flow or any other parameter that correlates with forced convection could be used. Curves 32, 34, 36, 38, 40, and 42 depict the power to maintain the temperature as a function of mass flow at altitudes of 14,000; 16,000; 18,000; 20,000; 22,000; and 24,000 feet respectively as shown in legend 44. FIG. 2 is for a constant static temperature. In the simplest form, FIG. 2 may be generalized to all conditions, including the presence of cloud, with the equation:

$$ Q = hA(T_w - T_r) + LWC \cdot V\beta A(T_w - T_s) + L_v A\dot{m}_{evap} \qquad \text{(Equation 1)} $$

Q is the power needed to maintain the wall temperature, Tw. The convection coefficient, h, is primarily a function of the Reynolds number, or the mass flow. That is, h increases with increasing mass flow. It is relatively straight-forward to determine the value of h from computational fluid dynamics analysis or based on wind tunnel data. Therefore, based on air data parameters, it is possible to provide a good estimate of the heater power required for a given surface area, A, to maintain the desired Tw in dry air. The last two terms in the equation account for liquid in the air, such as in a cloud or fog. The aircraft velocity, V and the static temperature, Ts, can be determined from aircraft air data, while the collection efficiency can be determined from computational fluid dynamics analysis. The addition of a droplet size measurement may improve the estimate of required heater power if collection efficiency changes significantly with droplet size. Additionally, a measurement of Liquid Water Content (LWC) is used to estimate the required heater power to maintain a given wall temperature in cloud. In the last term, mevap is the evaporated mass flux of water and is primarily a function of Tw, Ts and the aircraft altitude. The latent heat of vaporization, Lv, can be considered to be constant or known. It is possible to add additional terms to Equation 1 to account for other physics. An example would be including the heat transfer from water run-back if the entire wall is not maintained at a uniform temperature or including transient thermal effects.

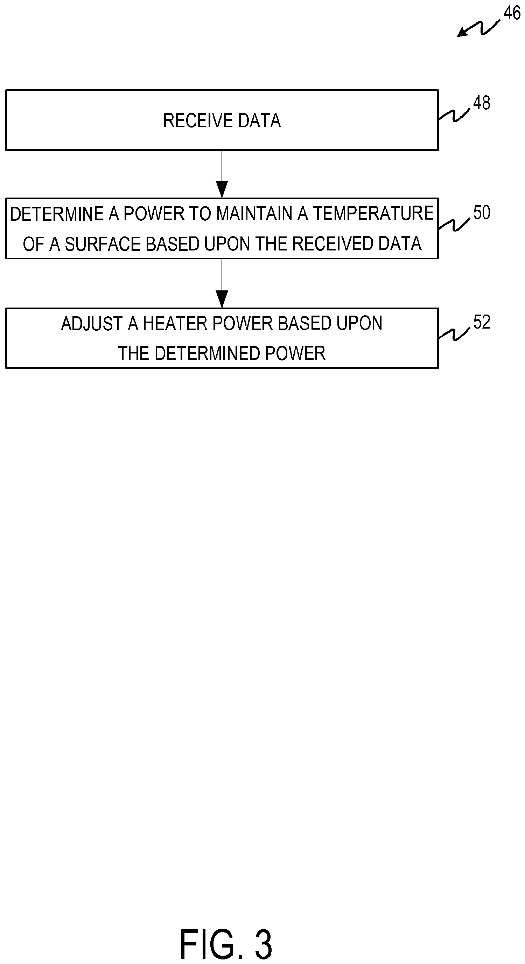

FIG. 3 is a flow diagram depicting process 46 for maintaining a temperature of an exterior surface of a vehicle. For purposes of clarity and ease of discussion, the example operations are described below within the context of exterior surface heater control system 10 of FIG. 1.

At step 48, data corresponding to an external air temperature of the vehicle, liquid water content of the air, and a speed of the vehicle is received using one or more communication device(s) 22. The data received from one or more device(s) 14 includes an exterior air temperature, a liquid water content of the air, and a speed of the vehicle. In one example, the data further includes an altitude of the vehicle. At step 50, a power to maintain the temperature of the exterior surface is determined, in response to receiving the data, using one or more processors 18 based upon the received data. Determining the power includes the power being inversely related to the air temperature, positively related to the liquid water content, and positively related to the speed of the vehicle. In one example, determining the power includes the power being positively related to the altitude of the vehicle. In a further example, the determining the power includes the power being positively related to a surface area of the exterior surface. At step 52, a heater power is adjusted, in response to determining the power, based upon the determined power using power supply 20.

Accordingly, implementing techniques of this disclosure, an exterior surface heater can be controlled without a temperature sensor. Using the exterior surface heating system described herein, a surface can be heated in a controlled manner without embedded temperature sensors which add a point of failure for the surface. This lowers the likelihood of the surface failing and needing to be replaced.

## DISCUSSION OF POSSIBLE EMBODIMENTS

The following are non-exclusive descriptions of possible embodiments of the present invention.

A surface heating system of an external surface of a vehicle, the system can comprise a heater configured to provide heat to the external surface; a heater controller configured to control a heater power of the heater based upon an air temperature of air external to the vehicle, a liquid water content of the air, and a speed of the vehicle.

The surface heating system of the preceding paragraph can optionally include, additionally and/or alternatively, any one or more of the following features, configurations and/or additional components:

The heater controller can be configured to increase the heater power in response to the air temperature decreasing; and the heater controller can be configured to decrease the heater power in response to the air temperature increasing.

The heater controller can be configured to increase the heater power in response to the liquid water content of the air increasing; and the heater controller can be configured to decrease the heater power in response to the liquid water content of the air decreasing.

The heater controller can be configured to increase the heater power in response to the speed of the vehicle increasing; and the heater controller can be configured to decrease the heater power in response to the speed of the vehicle decreasing.

The heater controller can be further configured to control the heater power based upon an altitude of the aircraft.

The surface of the vehicle can be a windscreen of the aircraft.

The heater controller can be configured to increase the heater power in response to the altitude of the aircraft increasing; and the heater controller can be configured to decrease the heater power in response to the altitude of the aircraft decreasing.

The heater controller can be further configured to receive the air temperature, the liquid water content, and the speed of the vehicle from a condition monitoring system of the aircraft.

The heater controller can be further configured to control the heater power based upon a surface area of the external surface.

A method comprising: receiving data, using one or more communication devices, corresponding to an external air temperature of a vehicle, a liquid water content of air, and a speed of the vehicle; determining, in response to receiving the data, a power to maintain a temperature of a surface of the vehicle based upon the received data using one or more processors; adjusting, in response to determining the power, a heater power based upon the determined power using a power supply.

Determining the power includes the power being inversely related to the external air temperature.

Determining the power includes the power being positively related to the liquid water content of the air.

The determining the power includes the power being positively related to the speed of the vehicle.

The vehicle can be an aircraft.

Receiving data further includes receiving data corresponding to an altitude of the aircraft.

The surface of the vehicle can be a windscreen of the aircraft.

Determining the power can be further based upon the altitude of the aircraft.

Determining the power includes the power being positively related to the altitude of the vehicle.

Determining the power can be further based upon a surface area of the external surface.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A surface heating system (10) for an external surface of a vehicle, the system comprising:

    a heater (16) configured to provide heat to the external surface;
    a heater controller (12) configured to control the heater power of the heater (16) based upon the air temperature of air external to the vehicle, the liquid water content of the air, and the speed of the vehicle,
    **characterised in that** the heater controller (12) is further configured to control the heater power of the heater (16) based upon the surface area of the external surface.

2. The surface heating system (10) of claim 1, wherein:

    the heater controller (12) is configured to increase the heater power in response to the air temperature decreasing; and
    the heater controller (12) is configured to decrease the heater power in response to the air temperature increasing.

3. The surface heating system (10) of claim 1 or 2, wherein:

    the heater controller (12) is configured to increase the heater power in response to the liquid water content of the air increasing; and
    the heater controller (12) is configured to decrease the heater power in response to the liquid water content of the air decreasing.

4. The surface heating system (10) of claim 1, 2 or 3, wherein:

    the heater controller (12) is configured to increase the heater power in response to the speed of the vehicle increasing; and
    the heater controller (12) is configured to decrease the heater power in response to the speed of the vehicle decreasing.

5. The surface heating system (10) of any preceding claim, wherein the vehicle is an aircraft, and wherein the heater controller (12) is further configured to control the heater power based upon the altitude of the aircraft, wherein, optionally, the surface of the vehicle is a windscreen of the aircraft.

6. The surface heating system (10) of claim 5, wherein:

    the heater controller (12) is configured to increase the heater power in response to the altitude of the aircraft increasing; and
    the heater controller (12) is configured to decrease the heater power in response to the altitude of the aircraft decreasing.

7. The surface heating system (10) of claim 5 or 6, wherein the heater controller (12) is further configured to receive the air temperature, the liquid water content, and the speed of the vehicle from a condition monitoring system of the aircraft.

8. A method for maintaining a temperature of an external surface of a vehicle with the surface heating system of any one of the preceding claims, the method comprising:

receiving data, using one or more communication devices, corresponding to an external air temperature of a vehicle, a liquid water content of air, and a speed of the vehicle;
determining, in response to receiving the data, a power to maintain a temperature of a surface of the vehicle based upon the received data using one or more processors;
adjusting, in response to determining the power, a heater power based upon the determined power using a power supply,
**characterised in that** determining the power is further based upon a surface area of the external surface.

9. The method of claim 8, wherein determining the power includes the power being inversely related to the external air temperature.

10. The method of claim 8 or 9, wherein determining the power includes the power being positively related to the liquid water content of the air.

11. The method of claim 8, 9 or 10, wherein determining the power includes the power being positively related to the speed of the vehicle.

12. The method of any of claims 8 to 11, wherein the vehicle is an aircraft, and wherein receiving data further includes receiving data corresponding to the altitude of the aircraft, wherein, optionally, the surface of the vehicle is a windscreen of the aircraft.

13. The method of claim 12, wherein determining the power is further based upon the altitude of the aircraft.

14. The method of claim 12 or 13, wherein determining the power includes the power being positively related to the altitude of the vehicle.

**Patentansprüche**

1. Oberflächenheizsystem (10) für eine Außenoberfläche eines Fahrzeugs, wobei das System Folgendes umfasst:

eine Heizvorrichtung (16), die zum Bereitstellen von Hitze an die Außenoberfläche konfiguriert ist;
eine Heizvorrichtungssteuerung (12), die zum Steuern der Heizvorrichtungsleistung der Heizvorrichtung (16) basierend auf der Lufttemperatur von Luft außerhalb des Fahrzeugs, dem Flüssigwasseranteil der Luft und der Geschwindigkeit des Fahrzeugs konfiguriert ist,
**dadurch gekennzeichnet, dass** die Heizvorrichtungssteuerung (12) ferner zum Steuern der Heizvorrichtungsleistung der Heizvorrichtung (16) basierend auf dem Oberflächenbereich der Außenoberfläche konfiguriert ist.

2. Oberflächenheizsystem (10) nach Anspruch 1, wobei:

die Heizvorrichtungssteuerung (12) zum Erhöhen der Heizvorrichtungsleistung als Reaktion auf das Absenken der Lufttemperatur konfiguriert ist; und
die Heizvorrichtungssteuerung (12) zum Absenken der Heizvorrichtungsleistung als Reaktion auf das Erhöhen der Lufttemperatur konfiguriert ist.

3. Oberflächenheizsystem (10) nach Anspruch 1 oder 2, wobei:

die Heizvorrichtungssteuerung (12) zum Erhöhen der Heizvorrichtungsleistung als Reaktion auf das Erhöhen des Flüssigwasseranteils der Luft konfiguriert ist; und

die Heizvorrichtungssteuerung (12) zum Absenken der Heizvorrichtungsleistung als Reaktion auf das Absenken des Flüssigwasseranteils der Luft konfiguriert ist.

4. Oberflächenheizsystem (10) nach Anspruch 1, 2 oder 3, wobei:

die Heizvorrichtungssteuerung (12) zum Erhöhen der Heizvorrichtungsleistung als Reaktion auf das Erhöhen der Geschwindigkeit des Fahrzeugs konfiguriert ist; und
die Heizvorrichtungssteuerung (12) zum Absenken der Heizvorrichtungsleistung als Reaktion auf das Absenken der Geschwindigkeit des Fahrzeugs konfiguriert ist.

5. Oberflächenheizsystem (10) nach einem der vorhergehenden Ansprüche, wobei das Fahrzeug ein Luftfahrzeug ist, und wobei die Heizvorrichtungssteuerung (12) ferner zum Steuern der Heizvorrichtungsleistung basierend auf der Flughöhe des Luftfahrzeugs konfiguriert ist,
wobei die Oberfläche des Fahrzeugs optional eine Windschutzscheibe des Luftfahrzeugs ist.

6. Oberflächenheizsystem (10) nach Anspruch 5, wobei:

die Heizvorrichtungssteuerung (12) zum Erhöhen der Heizvorrichtungsleistung als Reaktion auf das Erhöhen der Flughöhe des Luftfahrzeugs konfiguriert ist; und
die Heizvorrichtungssteuerung (12) zum Absenken der Heizvorrichtungsleistung als Reaktion auf das Absenken der Flughöhe des Luftfahrzeugs konfiguriert ist.

7. Oberflächenheizsystem (10) nach Anspruch 5 oder 6, wobei die Heizvorrichtungssteuerung (12) ferner zum Empfangen der Lufttemperatur, des Flüssigwasseranteils und der Geschwindigkeit des Fahrzeugs von einem Zustandsüberwachungssystem des Luftfahrzeugs konfiguriert ist.

8. Verfahren zur Aufrechterhaltung einer Temperatur einer Außenoberfläche eines Fahrzeugs mit dem Oberflächenheizsystem nach einem der vorhergehenden Ansprüche, wobei das Verfahren Folgendes umfasst:

Empfangen von Daten entsprechend einer Außenlufttemperatur eines Fahrzeugs, eines Flüssigwasseranteils der Luft und einer Geschwindigkeit des Fahrzeugs unter Verwendung einer oder mehrerer Kommunikationsvorrichtungen;
Bestimmen einer Leistung zum Aufrechterhalten einer Temperatur einer Oberfläche des Fahrzeugs als Reaktion auf das Empfangen der Daten basierend auf den empfangenen Daten unter Verwendung eines oder mehrerer Prozessoren;
Anpassen einer Heizvorrichtungsleistung als Reaktion auf das Bestimmen der Leistung basierend auf der bestimmten Leistung unter Verwendung einer Leistungszufuhr,
**dadurch gekennzeichnet, dass** das Bestimmen der Leistung ferner auf einem Oberflächenbereich der Außenoberfläche basiert.

9. Verfahren nach Anspruch 8, wobei das Bestimmen der Leistung beinhaltet, dass die Leistung umgekehrt mit der Außenlufttemperatur zusammenhängt.

10. Verfahren nach Anspruch 8 oder 9, wobei das Bestimmen der Leistung beinhaltet, dass die Leistung positiv mit dem Flüssigwasseranteil der Luft zusammenhängt.

11. Verfahren nach Anspruch 8, 9 oder 10, wobei das Bestimmen der Leistung beinhaltet, dass die Leistung positiv mit der Geschwindigkeit des Fahrzeugs zusammenhängt.

12. Verfahren nach einem der Ansprüche 8 bis 11, wobei das Fahrzeug ein Luftfahrzeug ist, und wobei das Empfangen von Daten ferner das Empfangen von Daten entsprechend der Flughöhe des Luftfahrzeugs beinhaltet,
wobei die Oberfläche des Fahrzeugs optional eine Windschutzscheibe des Luftfahrzeugs ist.

13. Verfahren nach Anspruch 12, wobei das Bestimmen der Leistung ferner auf der Flughöhe des Luftfahrzeugs basiert.

14. Verfahren nach Anspruch 12 oder 13, wobei das Bestimmen der Leistung beinhaltet, dass die Leistung positiv mit der Flughöhe des Fahrzeugs zusammenhängt.

**Revendications**

1. Système de chauffage de surface (10) pour une surface externe d'un véhicule, le système comprenant :

   un dispositif de chauffage (16) conçu pour fournir de la chaleur à la surface externe ;
   un régulateur de dispositif de chauffage (12) conçu pour réguler la puissance de chauffage du dispositif de chauffage (16) sur la base de la température de l'air extérieur au véhicule, de la teneur en eau liquide de l'air et de la vitesse du véhicule,
   **caractérisé en ce que** le régulateur de dispositif de chauffage (12) est en outre conçu pour réguler la puissance de chauffage du dispositif de chauffage (16) sur la base de la superficie de la surface externe.

2. Système de chauffage de surface (10) selon la revendication 1, dans lequel :

   le régulateur de dispositif de chauffage (12) est conçu pour augmenter la puissance de chauffage en réponse à la diminution de la température de l'air ; et
   le régulateur de dispositif de chauffage (12) est conçu pour diminuer la puissance de chauffage en réponse à l'augmentation de la température de l'air.

3. Système de chauffage de surface (10) selon la revendication 1 ou 2, dans lequel :

   le régulateur de dispositif de chauffage (12) est conçu pour augmenter la puissance de chauffage en réponse à l'augmentation de la teneur en eau liquide de l'air ; et
   le régulateur de dispositif de chauffage (12) est conçu pour diminuer la puissance de chauffage en réponse à la diminution de la teneur en eau liquide de l'air.

4. Système de chauffage de surface (10) selon la revendication 1, 2 ou 3, dans lequel :

   le régulateur de dispositif de chauffage (12) est conçu pour augmenter la puissance de chauffage en réponse à l'augmentation de la vitesse du véhicule ; et
   le régulateur de dispositif de chauffage (12) est conçu pour diminuer la puissance de chauffage en réponse à la diminution de la vitesse du véhicule.

5. Système de chauffage de surface (10) selon une quelconque revendication précédente, dans lequel le véhicule est un aéronef, et dans lequel le régulateur de dispositif de chauffage (12) est en outre conçu pour réguler la puissance de chauffage sur la base de l'altitude de l'aéronef,
   dans lequel, éventuellement, la surface du véhicule est un parebrise de l'aéronef.

6. Système de chauffage de surface (10) selon la revendication 5, dans lequel :

   le régulateur de dispositif de chauffage (12) est conçu pour augmenter la puissance de chauffage en réponse à l'augmentation de l'altitude de l'aéronef ; et
   le régulateur de dispositif de chauffage (12) est configuré pour diminuer la puissance de chauffage en réponse à la diminution de l'altitude de l'aéronef.

7. Système de chauffage de surface (10) selon la revendication 5 ou 6, dans lequel le régulateur de dispositif de chauffage (12) est en outre conçu pour recevoir la température de l'air, la teneur en eau liquide et la vitesse du véhicule à partir d'un système de surveillance de l'état de l'aéronef.

8. Procédé permettant de maintenir une température d'une surface externe d'un véhicule avec le système de chauffage de surface selon l'une quelconque des revendications précédentes, le procédé comprenant :

   la réception de données, à l'aide d'un ou de plusieurs dispositifs de communication, correspondant à une température de l'air extérieur d'un véhicule, à une teneur en eau liquide de l'air et à une vitesse du véhicule ;
   la détermination, en réponse à la réception des données, d'une puissance pour maintenir une température d'une surface du véhicule sur la base des données reçues à l'aide d'un ou de plusieurs processeurs ;
   le réglage, en réponse à la détermination de la puissance, d'une puissance de chauffage sur la base de la puissance déterminée à l'aide d'une alimentation électrique,
   **caractérisé en ce que** la détermination de la puissance est en outre basée sur une superficie de la surface externe.

9. Procédé selon la revendication 8, dans lequel la détermination de la puissance comporte le fait que la puissance soit inversement associée à la température de l'air extérieur.

10. Procédé selon la revendication 8 ou 9, dans lequel la détermination de la puissance comporte le fait que la puissance soit positivement associée à la teneur en eau liquide de l'air.

11. Procédé selon la revendication 8, 9 ou 10, dans lequel la détermination de la puissance comporte le fait que la puissance soit positivement associée à la vitesse du véhicule.

12. Procédé selon l'une quelconque des revendications 8 à 11, dans lequel le véhicule est un aéronef, et dans lequel la réception de données comporte en outre la réception de données correspondant à l'altitude de l'aéronef, dans lequel, éventuellement, la surface du véhicule est un parebrise de l'aéronef.

13. Procédé selon la revendication 12, dans lequel la détermination de la puissance est en outre basée sur l'altitude de l'aéronef.

14. Procédé selon la revendication 12 ou 13, dans lequel la détermination de la puissance comporte le fait que la puissance soit positivement associée à l'altitude du véhicule.

FIG. 1

FIG. 2

EP 3 487 261 B1

46

```
┌────────────────────────────────────────────────────┐
│                                                      │  48
│                    RECEIVE DATA                      │
│                                                      │
└────────────────────────────────────────────────────┘
                          │
                          ▼
┌────────────────────────────────────────────────────┐
│ DETERMINE A POWER TO MAINTAIN A TEMPERATURE          │  50
│ OF A SURFACE BASED UPON THE RECEIVED DATA            │
└────────────────────────────────────────────────────┘
                          │
                          ▼
┌────────────────────────────────────────────────────┐
│           ADJUST A HEATER POWER BASED UPON           │  52
│                THE DETERMINED POWER                  │
└────────────────────────────────────────────────────┘
```

# FIG. 3

**EP 3 487 261 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100123044 A1
- WO 2016027184 A1